Europäisches Patentamt

European Patent Office

Office européen des brevets

(19)

(11) Numéro de publication : **0 119 923 B1**

(12) # FASCICULE DE BREVET EUROPÉEN

(45) Date de publication du fascicule du brevet :
20.08.86

(51) Int. Cl.⁴ : **B 62 D 5/22**

(21) Numéro de dépôt : **84400521.5**

(22) Date de dépôt : **14.03.84**

(54) **Direction assistée à sortie centrale.**

(30) Priorité : **22.03.83 ES 521289**

(43) Date de publication de la demande :
**26.09.84 Bulletin 84/39**

(45) Mention de la délivrance du brevet :
**20.08.86 Bulletin 86/34**

(84) Etats contractants désignés :
**DE FR GB IT**

(56) Documents cités :
**FR-A- 1 188 784**
**FR-A- 2 122 236**
**FR-A- 2 209 899**
**GB-A- 1 241 428**
**US-A- 3 312 148**
**US-A- 4 028 957**
**Patent Abstracts of Japan vol.5,no.2,9 janvier 1981**

(73) Titulaire : **BENDIX ESPANA S.A.**
**Balmes 243**
**Barcelona 6 (ES)**

(72) Inventeur : **Esteia Rosell, Jorge**
**c/ Escornaibou 23 1o 1a**
**Barcelona 26 (ES)**

(74) Mandataire : **Le Moenner, Gabriel et al**
**SERVICE BREVETS BENDIX 44, Rue François 1er**
**F-75008 Paris (FR)**

Jouve, 18, rue St-Denis, 75001 Paris, France

## Description

La présente invention concerne les directions assistées à sortie centrale, du type comprenant un boîtier de direction renfermant un mécanisme coopérant à pignon et crémaillère, un moyen de cylindre relié au boîtier et renfermant un moyen de piston relié à la crémaillère, des moyens distributeurs pour acheminer sélectivement un fluide sous pression dans le moyen de cylindre au moins du côté du moyen de piston opposé à la crémaillère, et des moyens de connexion de l'équipage crémaillère/moyen de piston à un embiellage de roues orientales disposés en un point intermédiaire entre les extrémités axialement opposées de cet équipage.

Les systèmes de direction assistée à sortie centrale du type défini ci-dessus comprennent habituellement un moyen de piston à double effet disposé dans le prolongement de la crémaillère, d'un côté de cette dernière, les moyens de connexion dits « centraux » de l'équipage mobile crémaillère/moyen de piston se raccordant à une zone en bout de crémaillère, par exemple à la tige de piston ou au moyen de piston, comme décrit notamment dans les documents FR-A-1 108 056 ou US-A-3 312 148. Les dispositifs connus présentent l'inconvénient de mettre en œuvre un équipage mobile relativement lourd et de fabrication et de montage délicats. De plus, le piston lui-même et la tige de piston concourent au guidage de la crémaillère, ce qui impose un alignement précis non seulement du cylindre et du boîtier de direction mais également des différents joints coulissants délimitant les chambres du cylindre, ce qui obère les coûts de fabrication et de montage du dispositif.

La présente invention a pour objet de proposer un dispositif de direction assistée du type sus-mentionné de conception simple et robuste, présentant une faible inertie, de coûts de fabrication et de montage réduits tout en offrant une fiabilité accrue.

Pour ce faire, selon une caractéristique de l'invention, la direction assistée comprend deux cylindres montés en opposition de part et d'autre du boîtier, en prolongement de celui-ci et renfermant chacun un piston relié par une tige de piston à l'extrémité adjacente d'un corps de crémaillère guidé dans le boîtier, les moyens de connexion étant reliés au corps de crémaillère.

Selon une autre caractéristique de l'invention, le corps de crémaillère comporte une face perpendiculaire à sa face dentée, portant contre une face d'appui interne correspondante du boîtier.

Avec un tel agencement, le corps de crémaillère se trouve lui-même guidé dans le boîtier et, du fait de la connexion du corps de crémaillère aux pistons par des tiges de piston — avantageusement reliées au corps de crémaillère dans un montage au moins initialement flottant, les dimensions du corps de crémaillère peuvent être réduites à la seule extension longitudinale de sa face dentée requise pour obtenir l'ampleur de débattement nécessaire, les cylindres pouvant être rapportés sur le boîtier sans devoir observer des critères d'alignement extrêmement précis.

Selon une autre caractéristique de l'invention, les moyens de connexion — reliés directement au corps de crémaillère — s'étendent au travers d'une paroi du boîtier formant ladite face interne d'appui, offrant ainsi la possibilité d'un agencement parfaitement symétrique, robuste et de montage simplifié.

La présente invention a pour autre objet de proposer un dispositif de direction assistée du type sus-mentionné permettant, en association avec des moyens distributeurs adéquats, une grande versatilité d'utilisations potentielles sans entraîner de surcroît de complexité à la fabrication ou au montage.

Pour ce faire, selon une caractéristique de l'invention, la tige de chaque piston traverse à coulissement étanche un moyen de joint monté dans le boîtier, les moyens distributeurs étant prévus pour acheminer sélectivement un fluide sous pression dans les deux chambres ainsi définies dans chaque cylindre de part et d'autre du piston correspondant.

Avec un tel agencement, chaque cylindre, de part et d'autre de la crémaillère, pouvant fonctionner en double effet, il est possible de moduler alternativement, dans un système à simple circuit, la pression dans les paires de chambres symétriques (c'est-à-dire agissant en opposition) de part et d'autre de la crémaillère ou, séquentiellement, de moduler, dans un système à double circuit, la pression dans les chambres agissant en parallèle de part et d'autre de la crémaillère pour se substituer aux chambres agissant en opposition ou renforcer l'action de ces dernières, par exemple selon que le véhicule se déplace sur route ou effectue des manœuvres de parking.

D'autres caractéristiques et avantages de la présente invention ressortiront de la description suivante des modes de réalisation, donnés à titre illustratif mais nullement limitatif, faite en relation avec les dessins annexés, sur lesquels :

la figure 1 représente schématiquement une demi-coupe longitudinale d'une direction assistée à sortie centrale à simple circuit selon l'invention ;

la figure 2 est une vue transversale en coupe suivant la ligne 2-2 de la figure 1 ;

la figure 3 est une vue en coupe similaire à la figure 1 montrant un mode de réalisation de direction assistée à sortie centrale à double circuit selon l'invention ; et

la figure 4 est une vue en coupe transversale suivant la ligne 4-4 de la figure 3.

Dans la description qui va suivre et sur les dessins, les éléments identiques ou analogues portent les mêmes chiffres de référence, éventuellement indicés.

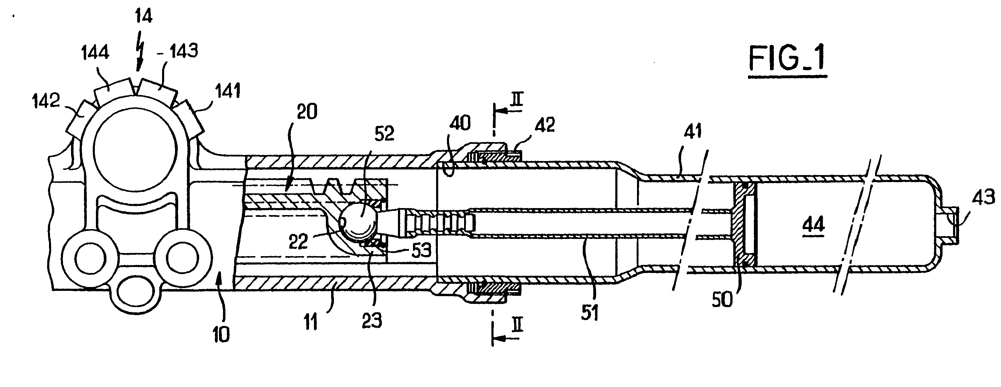

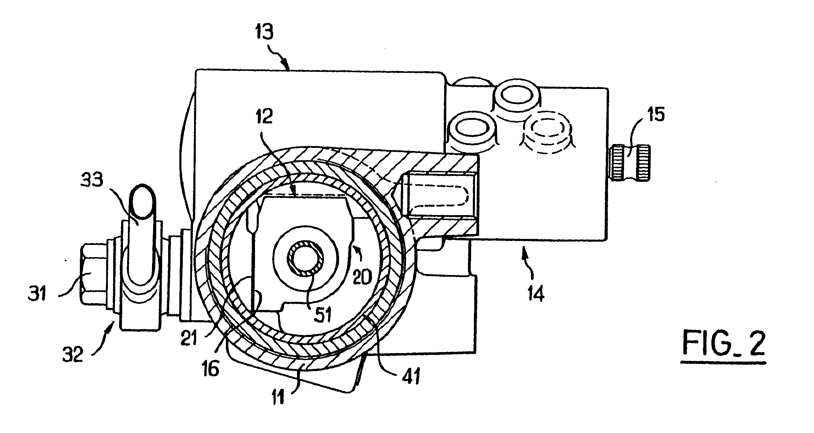

Le mécanisme de direction assistée représenté sur les figures 1 et 2 comprend généralement un boîtier de direction 10, réalisé en fonderie, comprenant deux parties d'extrémité 11 de configuration cylindrique. Dans le boîtier 10 est monté un corps de crémaillère 20 coopérant en prise avec un pignon 12 monté tourillonnant dans un logement cylindrique du boîtier 13 et actionné, via une valve de distribution rotative, également montée dans un prolongement tubulaire du boîtier, par un organe d'entrée 15 destiné à être relié au volant de direction du véhicule.

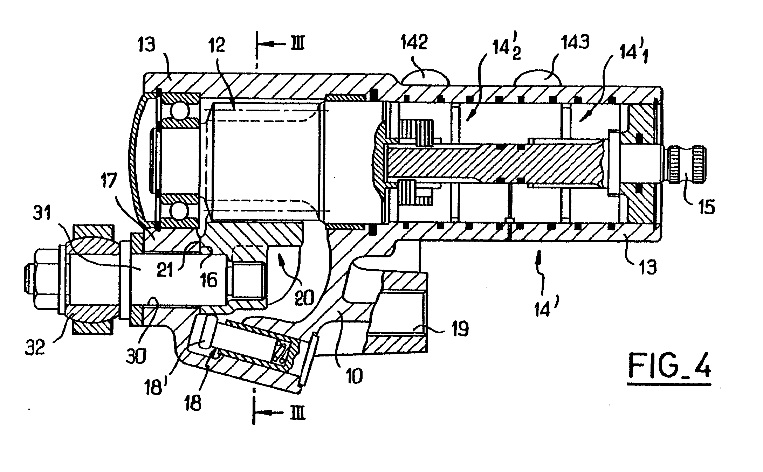

Comme on le voit sur la figure 2, le corps de crémaillère comporte latéralement une face plane dressée 21 perpendiculaire à la face portant la denture coopérant avec le pignon 12 et portant à coulissement contre une face d'appui interne correspondante 16 formée par une paroi latérale 17 (figure 4) du boîtier 10. Le corps de crémaillère 20 comporte également une face parallèle à sa denture et coopérant avec dispositif de réaction élastique 18 monté en biais dans le boîtier 10 à l'aplomb du pignon 12 pour exercer sur le corps de crémaillère 20 une sollicitation dans une direction décalée angulairement de la verticale à la face dentée de la crémaillère et pourvu avantageusement, en bout, d'un galet rotatif 18'. Le boîtier 10 est pourvu de moyens, tels que 19, pour sa solidarisation à un châssis de véhicule.

Conformément à un aspect de l'invention, la paroi 17 est formée avec une ouverture longitudinale 30 au travers de laquelle s'étendent une paire d'éléments d'axes 31 fixés, à leur extrémité intérieure, au corps de crémaillère 20 et portant, à leur extrémité extérieure, des moyens de connexion articulés à rotule 32 pour leur raccordement à des biellettes 33 de timonerie de roues orientales de véhicule. Avec cet agencement, la crémaillère 20 se trouve ainsi parfaitement guidée et maintenue en engagement avec le pignon 12 dans le boîtier 10.

Conformément à l'invention, dans un alésage d'extrémité 40 de l'extrémité cylindrique 11 du boîtier 10 est monté un cylindre 41 réalisé par exemple en emboutissage profond et maintenu en place par une bague filetée 42. Dans la partie d'extrémité rectifiée intérieurement du cylindre 41 est monté à coulissement un piston 50 relié au corps de crémaillère 20 par une tige creuse 51. La tige 51 a son extrémité opposée au piston 50 sertie sur une tige d'une rotule 52 montée dans un siège de rotule hémisphérique 22 formé dans l'extrémité cylindrique 23 du corps de crémaillère 20 et verrouillée en place dans ce logement 22 dans la position correspondant à un alignement convenable du piston 50 avec le cylindre 41 par une bague de verrouillage 53. Le fond d'extrémité extérieure du cylindre 41 est prévu avec un embout 43 destiné à être raccordé à la sortie de distribution correspondante 141 (ou 142) de la valve 14 pourvue par ailleurs d'embouts d'entrée 143 et de retour 144 de fluide d'actionnement sous pression. De cette façon, la rotation de l'organe d'entrée 15 dans l'une ou l'autre direction permet d'adresser dans la chambre 44 définie entre le piston et le fond du cylindre 41 correspondant une pression d'assistance au déplacement de la crémaillère 20, et donc, aux organes de sortie 32, 33.

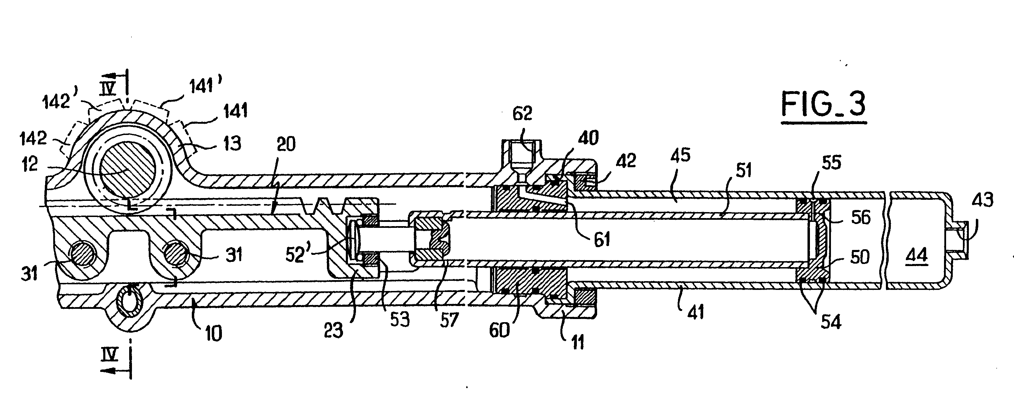

Le mode de réalisation des figures 3 et 4 se distingue essentiellement de celui précédemment décrit en ce sens qu'il comporte une valve de distribution 14' à double circuit comprenant, dans l'exemple représenté, un montage en série, actionnable par le même organe d'entrée 15, d'une valve de distribution primaire $14'_1$ et d'une valve de distribution secondaire $14'_2$ et constituée par exemple de deux valves à rotors en étoile et à ressorts en C du type décrit dans la demande de brevet EP-A-0 077 710 au nom de la demanderesse. Corrélativement, l'équipage piston 50/cylindre 41 est agencé, de chaque côté du boîtier de direction 10, pour fonctionner en double effet. De ce fait, dans l'extrémité cylindrique 11 du boîtier 10 est montée, en butée contre le même épaulement d'arrêt que celui du cylindre 41, une structure de joint annulaire 60 coulissant de façon étanche sur la surface extérieure du tube de diamètre agrandi formant la tige 51 du piston 50. La structure de joint annulaire 60 définit ainsi, du côté du piston opposé à la chambre primaire 44, une chambre secondaire annulaire 45 alimentée par un conduit d'alimentation 61 formé dans la structure de joint annulaire 60 et débouchant dans une gorge annulaire intérieure de l'extrémité cylindrique 11 du boîtier 10, elle-même communiquant avec un embout 62 de raccordement à l'une des sorties de distribution 141, 141' (ou 142, 142') de la paire de sorties de distribution de la valve 14' intéressant les chambres d'actionnement correspondantes de chaque paire piston/cylindre. Comme on le voit sur la figure 3, le piston 50 comporte deux joints de coulissement 54, axialement espacés l'un de l'autre, une gorge périphérique annulaire 55 étant ménagée entre ces deux joints 54 et communiquant à l'intérieur de la tige creuse 51 par un conduit radial 56 formé dans l'épaisseur du piston 50 de façon à drainer le fluide d'actionnement franchissant l'un ou l'autre des joints 54, ce drainage s'évacuant dans le boîtier 10 par un orifice 57 formé dans la paroi de la tige 51 au voisinage de son extrémité de raccordement avec la crémaillère 20. Dans le mode de réalisation représenté sur la figure 3, la liaison permettant de trouver initialement l'alignement correct entre la crémaillère et le piston 50 comprend une rotule lenticulaire 52' pressée contre le fond d'un logement cylindrique formé dans l'extrémité cylindrique 23 du corps de crémaillère 20 et verrouillée dans la position angulaire requise par une bague filetée 53.

Avec un tel agencement, la valve à double circuit 14' peut être agencée de façon à moduler sélectivement la pression dans les paires de chambres symétriques (44 ou 45) de part et d'autre de la crémaillère, ou encore pour sélectivement alternativement moduler la pression dans les paires de chambres agissant en parallèle (44 ou 45) de part et d'autre de la crémaillère.

## Revendications

1. Direction assistée à sortie centrale comprenant : un boîtier de direction (10) renfermant un mécanisme coopérant à pignon (12) et crémaillère (20) ; un moyen de cylindre (41) relié au boîtier et renfermant un moyen de piston (50) relié à la crémaillère ; des moyens distributeurs (14 ; 14') pour acheminer sélectivement un fluide sous pression dans le moyen de cylindre, au moins du côté (44) du moyen de piston opposé à la crémaillère ; et des moyens de connexion (31) de l'équipage crémaillère/moyen de piston à un embiellage (33) de roues orientales disposés en un point intermédiaire entre les extrémités axialement opposées de cet équipage, caractérisée en ce qu'elle comprend deux cylindres (41) montés en opposition de part et d'autre du boîtier (10), en prolongement de celui-ci et renfermant chacun un piston (50) relié par une tige de piston (51) à l'extrémité adjacente (23) d'un corps de crémaillère (20) guidé (21, 16) dans le boîtier (10), les moyens de connexion (31) étant fixés au corps de crémaillère (20).

2. Direction assistée selon la revendication 1, caractérisée en ce que le corps de crémaillère (20) comporte une face (21) perpendiculaire à sa face dentée, portant contre une face d'appui interne correspondante (16) du boîtier (10).

3. Direction assistée selon la revendication 2, caractérisée en ce que les moyens de connexion (31) s'étendent au travers d'une paroi (17) du boîtier (10) formant cette face d'appui (16).

4. Direction assistée selon la revendication 2 ou la revendication 3, caractérisée en ce qu'elle comporte un dispositif de réaction élastique (18) coopérant avec la crémaillère (20) et exerçant une sollicitation dans une direction décalée angulairement de la verticale à la face dentée de la crémaillère.

5. Direction assistée selon l'une des revendications 1 à 4, caractérisée en ce que l'extrémité de chaque tige (51) opposée au piston (50) est reliée au corps de crémaillère (20) par des moyens de liaison (52, 52') offrant, au moins avant assemblage final (53), une possibilité de débattement relatif limité par rapport au corps de crémaillère.

6. Direction assistée selon l'une des revendications 1 à 5, caractérisée en ce que la tige (51) de chaque piston (50) traverse à coulissement étanche un moyen de joint (60) monté dans le boîtier (10), les moyens distributeurs (14') étant prévus pour acheminer sélectivement un fluide sous pression dans les deux chambres (44, 45) définies dans chaque cylindre (41) de part et d'autre du piston correspondant.

7. Direction assistée selon l'une des revendications 1 à 6, caractérisée en ce que chaque tige (51) est constituée d'un tube creux.

8. Direction assistée selon la revendication 6 et la revendication 7, caractérisée en ce que le piston (50) comprend deux joints coulissants périphériques axialement séparés (54) et définissant entre eux une cavité annulaire (55), et un passage interne (56) faisant communiquer cette cavité annulaire avec l'espace intérieur de la tige creuse (51), un passage d'intercommunication (57) étant prévu, au voisinage de l'extrémité de la tige opposée au piston (50), pour faire communiquer l'espace intérieur de la tige avec l'intérieur du boîtier (10).

9. Direction assistée selon l'une des revendications 6 à 8, caractérisée en ce que le moyen de joint (60) comporte un chenal (61) de passage de fluide d'actionnement communiquant avec la chambre adjacente (45) du cylindre (41) correspondant.

10. Direction assistée selon l'une des revendications 6 à 9, caractérisée en ce que les moyens distributeurs (14') comprennent un système de valves de distribution (14'$_1$, 14'$_2$) agencé pour sélectivement moduler la pression dans les paires de chambres symétriques de part et d'autre de la crémaillère (20).

11. Direction assistée selon l'une des revendications 6 à 9, caractérisée en ce que les moyens distributeurs (14') comprennent un système de valves de distribution (14'$_1$, 14'$_2$) agencé pour sélectivement et alternativement moduler la pression dans les paires de chambres agissant en parallèle de part et d'autre de la crémaillère (20).

12. Direction assistée selon l'une des revendications précédentes caractérisée en ce que les moyens distributeurs (14, 14') sont du type à valve rotative et sont montés dans le boîtier, coaxialement au pignon.

## Claims

1. A servo steering device of the central output type, comprising a steering casing (10) enclosing a co-operating pinion (12)-rack (20)-mechanism ; cylinder means (41) connected to the casing and enclosing piston means (50) connected to the rack ; distributor means (14 ; 14') for selectively feeding a pressure fluid into the cylinder means at least on the side (44) of the piston means opposite to the rack ; and means (31) for connecting the rack-piston-assembly to a linkage (31) of steerable wheels disposed at a point intermediate the axially opposite ends of said assembly, characterized in that it comprises two cylinders (41) oppositely mounted on one side and the other of the casing (10) in extension of the latter and each enclosing a piston (50) connected to a piston rod (51) at the adjacent end (23) of a rack body (20) guided (21, 16) in the casing (10), the connection means (31) being fixed to the rack body (20).

2. Servo steering device according to claim 1, characterized in that the rack body (20) has a face (21) perpendicular to its toothed face and in abutment with a corresponding internal abutment face (16) of the casing (10).

3. Servo steering device according to claim 2, characterized in that the connection means (31) extends across a wall (17) of the casing (10) forming said abutment face (16).

4. Servo steering device according to claim 2 or claim 3, characterized in that it includes a resilient reaction device (18) cooperating with the rack (20) and exerting a bias on the toothed face of the rack in a direction angularly displaced with respect to the vertical.

5. Servo steering device according to any of claims 1 to 4, characterized in that the extremity of each rod (51) opposite to the piston (50) is connected to the rack body (20) by connection means (52, 52') allowing, at least prior to final assembly (53), for the possibility of limited relative displacement with respect to the rack body.

6. Servo steering device according to any of claims 1 to 5, characterized in that the rod (51) of each piston (50), in a fluid-tight manner, slidingly passes through means (60) mounted in the casing (10), the distributor means (14') being provided for selectively feeding a pressure fluid into the two chambers (44, 45) defined in each cylinder (41) on opposite sides of the corresponding piston.

7. Servo steering device according to any of claims 1 to 6, characterized in that each rod (51) is constituted by a hollow tube.

8. Servo steering device according to claim 6 or claim 7, characterized in that the piston (50) comprises two sliding peripheral seals (54) axially separated and defining between them an annular cavity (55), and an internal passage (56) providing for communication between said annular cavity and the interior of the hollow rod (51), a connecting passage (57) being provided adjacent the extremity of the rod opposite to the piston (50) for providing communication between the interior of the rod and the interior of the casing (10).

9. Servo steering device according to any of claims 6 to 8, characterized in that the seal means (60) comprises an actuating fluid passage channel (61) communicating with the adjacent chamber (45) of the corresponding cylinder (41).

10. Servo steering device according to any of claims 6 to 9, characterized in that the distributor means (14') comprise a distribution valve system (14'$_1$, 14'$_2$) arranged to selectively modulate the pressure in the pairs of chambers symmetrical on one side and the other of the rack (20).

11. Servo steering device according to any of claims 6 to 9, characterized in that the distributor means (14') comprise a distributor valve system (14'$_1$, 14'$_2$) arranged to selectively and alternatively modulate the pressure in the pairs of chambers acting in parallel on one side and the other of the rack (20).

12. Servo steering device according to any of the preceding claims, characterized in that the distributor means (14, 14') are of the rotational valve type and are mounted in the casing coaxially to the pinion.

**Patentansprüche**

1. Lenkhilfe mit zentralem Ausgang, mit einem Lenkgehäuse (10), das einen aus Zahnrad (12) und Zahnstange (20) bestehenden mitwirkenden Mechanismus umfaßt; einem Zylinder (41), der mit dem Gehäuse verbunden ist und einen mit der Zahnstange verbundenen Kolben (50) einschließt; einer Verteilereinrichtung (14; 14') zum wahlweisen Zuführen von Druckmittel in den Zylinder auf zumindest der von der Zahnstange abgewandten Seite (44) des Kolbens; und Verbindungsmitteln (31) zum Verbinden der Zahnstangen-Kolben-Anordnung mit einem Gestänge (33) lenkbarer Räder, die an einem Punkt zwischen den axial gegenüberliegenden Enden dieser Anordnung liegen, dadurch gekennzeichnet, daß sie zwei Zylinder (41) aufweist, die gegenüberliegend beidseitig zum Gehäuse (10) in Verlängerung desselben angebracht sind und jeweils einen Kolben (50) einschließen, der durch eine Kolbenstange (51) mit dem angrenzenden Ende (23) eines Zahnstangenkörpers (20) verbunden ist, der in dem Gehäuse (10) geführt (21, 16) ist, wobei die Verbindungsmittel (31) an dem Zahnstangenkörper (20) befestigt sind.

2. Lenkhilfe nach Anspruch 1, dadurch gekennzeichnet, daß der Zahnstangenkörper (20) eine zu seiner verzahnten Fläche senkrecht verlaufende Fläche (21) aufweist, die an einer entsprechenden inneren Anlagefläche (16) des Gehäuses (10) anliegt.

3. Lenkhilfe nach Anspruch 2, dadurch gekennzeichnet, daß die Verbindungsmittel (31) sich durch eine Wand (17) des Gehäuses (10) erstrecken, die diese Anlagefläche (16) bildet.

4. Lenkhilfe nach Anspruch 2 oder 3, dadurch gekennzeichnet, daß sie eine elastische Reaktionsvorrichtung (18) aufweist, die mit der Zahnstange (20) zusammenwirkt und eine Vorspannung in einer zur Vertikalen geneigten Richtung auf die verzahnte Fläche der Zahnstange ausübt.

5. Lenkhilfe nach einem der Ansprüche 1-4, dadurch gekennzeichnet, daß das dem Kolben (50) entgegengesetzte Ende jeder Kolbenstange (51) mit dem Zahnstangenkörper (20) durch Verbindungsmittel (52, 52') verbunden ist, die zumindest vor der Endmontage (53) begrenzte Fehlausrichtung relativ zum Zahnstangenkörper zulassen.

6. Lenkhilfe nach einem der Ansprüche 1-5, dadurch gekennzeichnet, daß sich die Kolbenstange (51) jedes Kolbens (50) gleitend und abgedichtet durch eine im Gehäuse (10) gelagerte Dichtung erstreckt, wobei die Verteilereinrichtung (14') zum wahlweisen Zuführen eines Druckmittels in die beiden Kammern (44, 45) dient, die in jedem Zylinder (41) zu beiden Seiten des entsprechenden Kolbens gebildet sind.

7. Lenkhilfe nach einem der Ansprüche 1-6, dadurch gekennzeichnet, daß jede Kolbenstange (51) von einem hohlen Rohr gebildet wird.

8. Lenkhilfe nach Anspruch 6 oder 7, dadurch gekennzeichnet, daß der Kolben (50) zwei gleitende Umfangsdichtungen (54) aufweist, die axial getrennt sind und zwischen sich einen Ringraum (55) bilden, und daß ein Innenkanal (56) diesen Ringraum mit dem Innenraum der hohlen Kolbenstange (51) verbindet, wobei benachbart zu dem dem Kolben (50) entgegengesetzten Ende der Kolbenstange ein Verbindungskanal (57) vorgesehen ist, der den Innenraum der Kolbenstange mit dem Inneren des Gehäuses (10) verbindet.

9. Lenkhilfe nach einem der Ansprüche 6-8, dadurch gekennzeichnet, daß die Dichtung (60) einen Kanal (61) für ein Betätigungsmittel aufweist, der mit der angrenzenden Kammer (55) des entsprechenden Zylinders (41) in Verbindung steht.

10. Lenkhilfe nach einem der Ansprüche 6-9, dadurch gekennzeichnet, daß die Verteilereinrichtung (14') aus einem Verteilerventilsystem (14'$_1$, 14'$_2$) besteht, das zur wahlweisen Modulation des Drucks in den beidseitig zur Zahnstange (20) symmetrischen Kammerpaaren dient.

11. Lenkhilfe nach einem der Ansprüche 6-9, dadurch gekennzeichnet, daß die Verteilereinrichtung (14') aus einem Verteilerventilsystem (14'$_1$, 14'$_2$) besteht, das zur wahlweisen und abwechselnden Modulation des Drucks in den beidseitig zur Zahnstange (20) parallelgeschalteten Kammerpaaren dient.

12. Lenkhilfe nach einem der vorhergehenden Ansprüche, dadurch gekennzeichnet, daß die Verteilereinrichtung (14, 14') als Drehventil ausgebildet und koaxial zum Zahnrad im Gehäuse gelagert ist.

FIG.1

144 14 143

142 141

142

20 52 40 42 41 43

144

22 53 44

10 11 23 51 50

II II

0 119 923

FIG_2

0 119 923

FIG_3

0 119 923

FIG_4

0 119 923